# EUROPEAN PATENT SPECIFICATION

(11) **EP 1 075 770 B1**
(45) Date of publication and mention of the grant of the patent: **19.02.2003**
(21) Application number: 99912431.6
(22) Date of filing: 11.03.1999
(51) Int. Cl.: H04Q 7/20, H04Q 7/38

(54) **METHOD AND APPARATUS FOR MOBILE STATION REGISTRATION IN A COMMUNICATION SYSTEM**
VERFAHREN UND VORRICHTUNG ZUR REGISTRIERUNG EINER MOBILSTATION IN EINEM KOMMUNIKATIONSSYSTEM
PROCEDE ET APPAREIL POUR LE RATTACHEMENT D'UNE STATION MOBILE DANS UN SYSTEME DE COMMUNICATION

(30) Priority: 27.04.1998 US 67505
(43) Date of publication of application: 14.02.2001
(73) Proprietor: MOTOROLA, INC., Schaumburg, IL 60196 (US)
(72) Inventor: OPRESCU-SURCOBE, Valentin, Northbrook, IL 60062 (US)
(74) Representative: McCormack, Derek James
(86) International application number: US9905342
(87) International publication number: WO99056476

(56) References cited:
- WO-A-98/30045
- JP-A- 4 249 925
- US-A- 5 588 043
- US-A- 5 590 398
- US-A- 5 629 975
- TABBANE S: "LOCATION MANAGEMENT METHODS FOR THIRD-GENERATION MOBILE SYSTEMS" IEEE COMMUNICATIONS MAGAZINE,US,IEEE SERVICE CENTER. PISCATAWAY, N.J, vol. 35, no. 8, 1 August 1997 (1997-08-01), pages 72-78,83-84, XP000704442 ISSN: 0163-6804

## Description

### Field of the Invention

The present invention relates generally to communication systems.

### Background of the Invention

In communication systems, such as cellular communication systems, the mobile users typically are required to register their locations with a nearest base station. Each base station provides cellular communication services within a limited coverage area. The coverage area may be called coverage zone. When a mobile station moves away from the coverage area, it should contemporaneously register its location with another base station that provides the cellular communication in the new area. When a large number of mobile users are traveling from a coverage area to another, a large number of contemporaneous registrations need to be handled by the cellular communication systems. For example, the base stations that provide cellular services along a highly used highway need to handle a large number of registrations because cars on a highway normally do not stay in one place for a long time. Such a large number of contemporaneous registrations may overburden the process of registration in the cellular communication system.

Moreover, the mobile stations normally use battery as their power source. When a mobile user is registering periodically with base stations, it has a negative effect on the battery life of the mobile station, however, such registration is required for proper operation of the cellular communication system.

Therefore, there is a need for reducing contemporaneous registrations of mobile stations in a cellular communication system while satisfying the requirements of the mobile stations registrations.

In the article "Location Management Methods for Third-Generation Mobile Systems" by S. Tabane, IEEE Communications Magazine, vol. 35, no. 8, 1 August 1997, pages 72-78, 83-84, several location management methods are discussed including pre-registering a user according to individual patterns.

### Brief Description of the Drawings

FIG. 1. depicts a communication system according to an embodiment of the invention.

FIG. 2. depicts a communication system according to another embodiment of the invention.

### Description of the Preferred Embodiment(s)

A large number of cellular phone users are commuters. Such mobile users for example commute from home to work and back according to a regular and repetitive pre-defined plan. The pre-defined travel plan has two main components, namely a pattern of time and location. For example, between hours of six and eight in the morning, a commuter is predictably at a specific location at a given time. Therefore, based on the pre-defined travel plan, it is highly predictable to know the location of a mobile user at a specific time. A communication system that provides communication services from a plurality of base stations in a corresponding plurality of coverage areas to a mobile station includes a method of pre-registering the mobile station according to the pre-defined plan. The pre-registration of the mobile station is a substitute for a contemporaneous registration of the mobile station. As a result, the mobile station is not required to register its location with base stations providing coverage in different coverage areas, thus, conserving its battery power. Moreover, the need to handle a large number of contemporaneous registrations by the cellular communication system when mobile stations are moving from one coverage areas to another is greatly reduced.

The pattern of time and location of the mobile station in the pre-defined plan may be based on a historical communication activities of the mobile station in the communication system. The historical communication activities may be monitored by the mobile station, at least one of the plurality of base stations, or both. The historical communication activities are analyzed through statistical methods to determine the pre-defined plan. The statistical analysis is based on a pattern of location and time of the mobile station. To communicate the pattern of location and time, the communication system allows communicating the pattern to at least one of the plurality of base stations, the mobile station, or both.

Very often a mobile user may have several pre-defined plans. When all such possible alternative pre-defined plans have been communicated, one of the pre-defined plans is selected as the pre-defined pre-registration plan. The mobile station may select the pre-defined plan, and communicate the selected pre-defined plan to at least one of the plurality of base stations. For example, the mobile station initially is pre-registered according to a first pre-defined plan. When the mobile station is traveling according to the initial pre-defined plan, it may change course and continue its travel according to an alternative plan. At this point the mobile station communicates the alternative pre-defined plan to the base station. Alternatively, one of the plurality of base stations selects the pre-defined plan, and communicates the selected pre-defined plan to the mobile station. If the base station decides to select the alternative pre-defined plan, it may be due to the result obtained by monitoring the activity of the mobile station.

The mobile station may be in an idle mode or an active mode while traveling according to its pre-defined plan. When the mobile station is in an active mode, the pre-defined plan of pre-registration is used to allocate resources to the mobile station in one coverage area of the plurality of coverage areas in advance of a hand-off from another coverage area of the plurality of coverage areas. The messages that are normally required to establish a resource for a call hand-off are not communicated. As a result, the invention reduces the communication overhead of the system, and eliminates possible drop calls when the mobile station is traveling at a high speed.

More particularly, the present invention relates to telecommunication systems such as personal communication systems (PCS). Cellular and PCS systems are widely deployed and well described in related literature. Such systems consist of one or more networks of interconnected mobile switching centers (MSC) which are supported by a number of home location registers (HLR) and visitor location registers (VLR), as well as other network elements. In some. systems, VLR is combined with MSC. Other systems use subscriber records stored at MSCs in lieu of information stored in HLRs. Such network elements and the communication between them are well described by standard specifications such as TIA/EIA/IS-41 and GSMmap. A copy of these and other standards may be obtained by contacting TIA, 2001 Pennsylvania Ave NW, Washington DC, 20006. The connection between the MSC and a BTS can be direct, or indirect, via a base station controller (BSC). When BSCs are used, there are typically several BSCs associated with an MSC and several BTS associated with each BSC. The term base station typically refers to a base station transceiver (BTS) or to a base station controller (BSC) and some of the several BTSs which it controls. Sometimes, the term base station is interpreted as "infrastructure" or the fixed side of the system and typically refers to the full network or elements of the network. The communication between an MSC and its base stations is well described in the art, for example by standards such as TIA/EIA/IS-634. The communication between base stations and mobile (or personal) stations (a. k. a. subscriber units) is described in standard specifications such as TIA/EIA/IS-95, ANSI J-STD-008, IS-91, IS-136, and others.

In cellular and personal communication systems (PCS), the mobile stations employed by mobile users typically have to register with base stations in their proximity. Each base station provides telecommunication services within a limited coverage area (cell or sector). A registration zone comprises the service coverage areas of one or more base station. Usually, registration zones are identified, with the identity of each zone being broadcast in "overhead" messages by the base stations in the zone. A mobile may be registered in several zones at the same time. The purpose of the registrations is to provide the network with an approximate location of the mobile station, to facilitate call delivery to the mobile station. A more accurate location of the mobile station is obtained through a process named paging. A paging message containing at least the identity of the mobile station is broadcast over a coverage area called a paging area, and the mobile station is expected to respond if it recognizes its identity in the paging message. In general, paging areas are correlated with registration areas, such that the paging can be geographically limited. In many systems a paging area comprises of one or more registration areas. A typical use would be to make the paging areas include and be slightly larger than corresponding registration areas. Another widely used solution is to simultaneously page not only on the paging area corresponding to the most recent registration area, but also in the neighboring paging areas. This last method can be refined by sending the page in the neighboring areas only if no response is received within a given amount of time from the mobile station, after being paged in the main paging area first. Regardless of the registration method used, the paging process may compensates for the lack of accuracy of the registration process. When a mobile station moves to a registration zone where it is not registered, it may attempt to register. Such a registration is usually referred to as zone-based registration or location-based registration. There are other types of registrations such as time-based, distance based, implicit, parameter change-based, and others. When large numbers of mobile users move between registration zones, correspondingly large numbers of registrations occur and need to be handled by the telecommunication systems. For example, the base stations that provide services along a highly used highway need to handle a large number of zone-based registrations because cars on a highway normally do not stay in one place (i. e. registration zone ) for a long time. The base stations and the supporting network have to be provisioned to handle the peak traffic.

Moreover, mobile stations normally use batteries as their power source. When a mobile station registers, it has to turn on its transmitter and use power to transmit the signals necessary for registration. The more a mobile station has to register, the more power it consumes and the sooner its battery is drained. The present invention solves the problem of large number of zone-based registrations, and improves the mobile station battery power consumption.

A large number of cellular and PCS phone users are commuters. Such mobile users, for example, commute from home to work and back according to fairly regular and repetitive patterns. Train commuters have typically very precise schedules; people commuting by car have more time variance in their commuting patterns, but those patterns could still be predictable. The travel pattern has two main components, namely time and location. For example, during each working day, between the hours of six and eight in the morning, a commuter could be predictably at approximately the same location at approximately the same time. Sometimes, there could be significant variability in the exact moment when a commuter starts his/her trip, but once the trip has started, the intervals of time between the moments when the commuter reaches given locations can be fairly constant. Therefore, assuming that the commuter carries a powered-on mobile station on him/her and follows a known traveling pattern, the locations where the mobile station would register and the times of those registrations are highly predictable, within a reasonably small margin of error. In other words, the predictable commuting pattern of the mobile user can be translated into a predictable pattern of registrations of the associated mobile station. A predictable pattern of registrations can be encoded as a pre-defined registration plan, known to both network and mobile station, and making the full signaling unnecessary.

According to this invention, a communication system that provides services from a plurality of base stations, grouped in registration zones, to a mobile station, includes a method of pre-registering the mobile station according to a predefined plan. The pre-registration of the mobile station is a substitute for zone-based registration of the mobile station. As a result, the mobile station is not required to repetitively register its location with base stations, thus, conserving its battery power. In addition, the signaling load on the network is also reduced.

Both the network and the mobile station must be able to determine the time of day and day of the week fairly accurately and have copies of the predefined registration plan. In general multiple registration plans for the same mobile station are available, corresponding to different days of the week, time of the day and the initial registration zone in the plan. The mobile station becomes aware of its current location in terms of a registration zone identity, by receiving and decoding the local overhead messages. If the received registration zone identification matches the registration zone identification (id) in the predefined plan for the current time of day, the mobile station will consider itself to be on schedule and will not register. Otherwise, the mobile station will consider itself to have deviated from the plan and will register immediately. When such an action occurs the mobile effectively switches registration plans. If the new zone matches an existing registration plan for which the time-of-day and day-of-the-week combination also matches, that new plan will be selected in lieu of the old one. If multiple plans match, one or the first plan in the set will be selected. If no plan matches, a registration in the current registration zone for the time of day and day of week, the mobile effectively selects the "default" plan. The default plan is a plan which does not match any registration zones, having the effect that the mobile station must register in each zone in which it is physically present but in which it is not currently registered.

On the network side, a similar process takes place. The registration plan can be selected by the time-of-day and day-of-the-week combination; it can be further activated only by the said combination or it can be activated only when a call must be delivered. Normally, an incoming call will be first routed to the subscriber home HLR. If valid, current registration information is available, it would be used to route the call in the usual way, to the specified destination. Otherwise, the predefined registration plan will be examined and the call will be routed to the destination contained in the predefined plan, corresponding to the time of day and day of the week combination. If a registration is received at the HLR, it can be used to select and start a new plan, to change from an old plan to a new one or the "default" plan . As a registration plan becomes active, it could be divided in sections ( subsets ) with each subset distributed to the appropriate VLR/MSC, which services the registration zone for the given time-day combination. Of course, if a plan is being updated or switched at the HLR, the new information has to be redistributed to the VLR/MSCs. In such cases the old. information becomes obsolete and must be deleted. The deletion can occur by overriding the old subset with the new one, can be driven by expiration times associated with each subset, or may require explicit signaling from the HLR. When a registration occurs the local MSC/VLR will pass the registration information along to the HLR.

The timing in a registration plan can be adjusted dynamically, by requiring registration in certain zones and using the information providing by the time of the registration. For example, an initial registration caused by a mobile station entering a new registration zone can be used as a time base which will be added to all subsequent time intervals in the registration plan to form absolute times for the day. In effect, initial and occasional subsequent registrations can be used to synchronize the predefined plan to the actual movements of the subscriber unit. Since both the mobile station and the network are aware of the time of each registration, the registration plans in both the mobile station and the network can be updated simultaneously.

When the interval of time, rather than the time base, allocated to a registration zone in a registration plan must be changed temporarily (e. g. during a traffic jam on a highway), the network may broadcast the changes in the overhead messages over the registration zone. Both network and mobile station may adjust the timing of the plan by multiplying the length of the interval of time by the broadcast factor, and updating the absolute times accordingly.

Relatively small deviations in time from the registration plan by the mobile station can be compensated by wide paging zones and paging or re-paging in neighboring zones, all known techniques in use today. Deviations in location as well as large deviations in time from the registration plan will result in the mobile station performing a registration. The use of registrations for temporary time updates to the registration plan, sometimes explicitly required by the registration plan, ensures that most of the deviations will be small.

In a preferred embodiment, the registration plans can be derived automatically, by recording the locations and timings of zone-based registrations over some observation period. Subsequently, well known statistical methods or other techniques such as neural networks can be used to discern regular patterns in the data. Once the patterns are found, they can be encoded as registration plans. Normally such work will be performed by the network and the final results, the registration plans, can be downloaded into the respective mobile stations. Alternatively, the mobile stations can derive the registration plans without direct network involvement, and then upload them into the network. Downloading and uploading data between the mobile stations and the network are well known in the art. For example, TIA/EIA/IS-683 is a standard specifying the setting of stored parameters over the air interface. Transaction processing-like signaling and encryption are used to ensure data integrity and confidentiality. Another alternative embodiment has the registration plans stored only in the mobile station and has it uploaded daily (or periodically, or occasionally) with the first registration signaling. Conversely, the registration plans can be stored only in the network to be downloaded occasionally to the mobile station as part of the signaling ensuing as a response to some registration.

The mobile station may be in an idle mode or on an active call while traveling according to its pre-defined plan. In the active call mode, the mobile station is communicating constantly with the a base station. When the mobile station is on an active call, the pre-defined plan of pre-registration can be used to pre-allocate resources to the mobile station in one coverage area of the plurality of coverage areas in advance of a hand-off from another coverage area of the plurality of coverage areas.

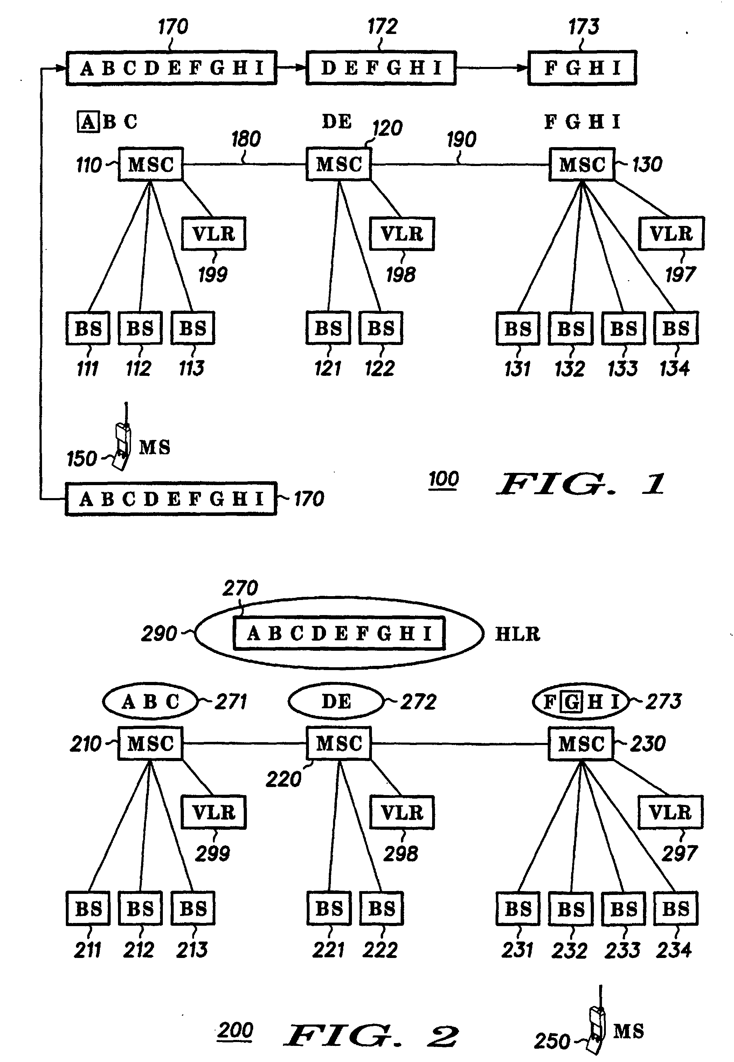

Referring to FIG. 1, a communication system 100 according to an embodiment of the invention is shown. Communication system 100 includes a plurality of base stations (BS) 111-113, 121-122, and 131-134, and a plurality of mobile switching centers (MSC) 110, 120, and 130, each in communication with at least one of the plurality of base stations 111-113, 121-122, and 131-134 and at least in communication with one other mobile switching center in the plurality of mobile switching centers 110, 120, and 130. Visitor location registrations (VLR) 199, 198, and 197 are coupled to MSC 110, 120, and 130 respectively. A mobile station 150 in a communication with at least one of the plurality of base stations 111-113, 121-122, and 131-134 communicates its pre-defined registration plan 170, and at least one of the plurality of mobile switching centers 110, 120, and 130 communicates pre-defined registration plan 170 to at least one other mobile switching center in the plurality of mobile switching centers 110, 120, and 130 when mobile station (MS) 150 moves to a coverage area provided by one of the plurality of base stations 111-113, 121-122, and 131-134 that is in communication with the other mobile switching center. In this example, for simplicity, but without affecting the more general situations, it can be assumed that a coverage area of a base station corresponds to a registration zone, The communication system may be a cellular or personal communication system. The mobile station is not required to register its location to a new base station when it moves to the coverage area that is provided by the new base station.

To illustrate the process of pre-registration, beginning by a situation that the mobile station 150 is in communication with BS 111 which is connected to MSC 110, MS 150 communicates its pre-defined registration plan 170 to BS 111. Plan 170 is then communicated to MSC 110. Plan 170 consists of expected location and time of MS 150 when it travels throughout the communication system coverage areas. Since each coverage areas is serviced by a BS, plan 170 indicates the location and time when MS 150 is expected to be in the coverage area served by a specific BS. As shown in FIG. 1, the plan consists of nine base station pre-registrations, namely A-I. The pre-registration "A" is a pre-registration referred to BS 111, "B" to BS 112, "C" to BS 113, "D" to BS 121, "E" to BS 122, "F" to BS 131, "G" to BS 132, "H" to 133, and "I" to BS 134. Mobile station 150 is expected to travel among BSs 111-113, 121-122, and 131-134 according to plan 170. When MS 150 is at BS 113, MSC 110 communicates plan 170, or a remaining portion (subset) 172 of plan 170, to MSC 120 through connection 180 ( e. g. an IS-41 connection ). MSC 120 accordingly pre-register MS 150 to BSs 121 and 122. Similarly, when MS 150 is at BS 122, MSC 120 communicates plan 170, or a remaining portion 173 of plan 170, to MSC 130 through connection 190. MSC 130 accordingly pre-register MS 150 to BSs 131-134. MS 150 completes its travel when it reaches the coverage areas at BS 134.

Referring to FIG. 2, a communication system 200 according to another embodiment of the invention is shown. Communication system 200 may be a cellular communication system. Communication system 200 includes a plurality of base stations (BS) 211-213, 221-222, and 231-234, and a plurality of mobile switching centers (MSC) 210, 220, and 230. Each of MSCs 210, 220, and 230 is in communication with at least one of the plurality of base stations 211-213, 221-222, and 231-234, and at least in communication with one other mobile switching center in the plurality of mobile switching centers 210, 220, and 230. Visitor location registrations (VLR) 299, 298, and 297 are coupled to MSCs 210, 220, and 230 respectively. A mobile station 250 is in a communication with at least one of the plurality of base stations. In communication system 200, a home location registration (HLR) 290 accessible by the plurality of mobile switching centers 210, 220, and 230 provides a pre-defined registration plan 270 of mobile station 250. When MS 250 travels in the coverage areas serviced by BSs 211-213, 221-222, and 231-234, MS 250 is pre-registered according to registration plan 270 as a substitute for MS 250 explicit registration. For example, when MS 250 is in a coverage area serviced by a BS, such as BSs 211, 212, and 213 associated with MSC 210, a portion (subset) 271 of plan 270 provides the travel pattern of MS 250 when it is in coverage areas serviced by BSs 211, 212, and 213. MS 250 is then pre-registered according to portion 271 of plan 270. A portion 272 of plan 270 is dedicated to travel pattern of MS 250 when it is in coverage areas serviced by BSs 221, and 222. MS 250 is then pre-registered according to portion 272 of plan 270. Similarly, a portion 273 of plan 270 is dedicated to travel pattern of MS 250 when it is in coverage areas serviced by BSs 231, 232, 233, and 234. MS 250 is then pre-registered according to portion 273 of plan 270. The HLR 290 divides the registration plan 270 into the subsets 271, 272 and 273 and communicates those subsets of the registration plan to the mobile switching centers ( or the associated visitor location registers ) 210, 220 and 230 respectively. As a result, mobile station 250 is not required to register its location to a new base station when it moves to the coverage that is provided by the new base station.

Table 1 shows simplified examples of registration plans.

**TABLE 1**

| Plan id | Activation day | Start of execution period | Initial registration zone | Starting trigger |
|---|---|---|---|---|
| 1 | Monday-Friday | - | zone A | 7:15 am |
| 2 | Tuesday, Thursday | 7:00- 9:00 am | zone B | first registration in zone B |
| 3 | last Saturday of each month | 4:00-5:15 pm | zone A | completion of plan 4 or plan 5 |

Three registration plans are shown: plan 1 executes every day Monday through Friday, starting at 7:15 am if the mobile station is in registration zone A; plan 2 starts executing only on Tuesday and Thursday, when the mobile station performs its first registration in zone B between 7:00 and 9:00 am; plan 3 starts executing only on the last Saturday of each month, as soon as either plan 4 or plan 5 complete, providing the time is between 4:00 and 5:15 pm.

Table 2 shows a simplified example of a registration plan including time and location.

**TABLE 2**

| Registration zone | Time in zone | Time accuracy | Always register on entering zone | Last registration zone in plan |
|---|---|---|---|---|
| zone B | 300 sec | +/- 45 sec | yes | no |
| zone C | 500 sec | +/- 90 sec | no | no |
| zone D | 500 sec | +/- 60 sec | no | yes |

The registration plan in Table 2 comprises of 3 registration zones: B, C and D. The mobile station is required to register when it enters zone B. Based on the time of the registration, the timings for all zones are computed. The mobile station is considered to be on schedule if it is in each registration zone according to the computed times, plus or minus the specified accuracy for the respective registration zone. If the mobile station deviates from the schedule, it will register immediately. In such cases the registration plan can be readjusted for timing, or can replaced with a different plan, including the default plan.

The direct benefit of the invention is that the mobile stations normally do not need to use their batteries to periodically register with base stations when it travels according to a pre-defined plan. Moreover, when a large number of registrations need to be handled by the cellular communication systems, this invention alleviates the overloading issue.

While the invention has been particularly shown and described with reference to a particular embodiment, it will be understood by those skilled in the art that various changes in form and details may be made therein without departing from the scope of the invention as defined in the claims. The corresponding structures, materials, acts and equivalents of all means or step plus function elements in the claims below are intended to include any structure, material, or acts for performing the functions in combination with other claimed elements as specifically claimed.

## Claims

1. A communication system comprising:
a plurality of base stations (111-113, 121-122, 131-134) providing a plurality of coverage areas;
a plurality of mobile switching centers (110, 120, 130), each in communication with at least one of said plurality of base stations and at least one other of said plurality of mobile switching centers; and
a mobile station (150) in communication with at least one of said plurality of base stations and adapted to store a registration plan (170) including time intervals and associated location areas where the mobile station is expected to be at that time in said plurality of coverage areas and adapted to communicate said registration plan to a base station and to one of said plurality of mobile switching centers to which it is in communication;
said mobile switching center adapted to communicate said registration plan to at least one other mobile switching center when the mobile station moves to a coverage area provided by a base station that is connected to the one other mobile switching center.

2. A method for mobile station registration comprising:
storing, in a mobile station (150), a registration plan (170) including time intervals and associated location areas where the mobile station is expected to be at that time in a plurality of coverage areas;
communicating said registration plan to a base station (111-113, 121-122, 131-134) and to one of a plurality of mobile switching centers (110, 120, 130) with which the mobile station is in communication;
communicating said registration plan from the one of a plurality of mobile switching centers to at least one other mobile switching center when the mobile station moves to a coverage area provided by a base station that is connected to the at least one other mobile switching center.

## Revendications

1. Système de télécommunications comprenant :
une pluralité de stations de base (111-113, 121-122, 131-134) produisant une pluralité de zones de couverture ;
une pluralité de centres de commutation mobiles (110, 120, 130), chacun étant en communication avec au moins une station de ladite pluralité de stations de base et au moins un autre centre de ladite pluralité de centres de commutation mobiles ; et
une station mobile (150) qui est en communication avec au moins une station de ladite pluralité de stations de base et est conçue pour stocker un plan d'enregistrement (170) comportant des intervalles de temps et des zones de localisation associées où on s'attend à ce que la station mobile se trouve à ce moment dans ladite pluralité de zones de couverture, et conçue pour communiquer ledit plan d'enregistrement à une station de base et à un centre de ladite pluralités de centres de commutation mobiles avec lesquels elle est en communication ;
ledit centre de commutation mobile conçu pour communiquer ledit plan d'enregistrement à au moins un autre centre de commutation mobile lorsque la station mobile se déplace à une zone de couverture produite par une station de base qui est connectée audit autre centre de commutation mobile.

2. Procédé d'enregistrement de station mobile, comprenant les opérations suivantes ;
stocker, dans une station mobile (150), un plan d'enregistrement (170) comportant des intervalles de temps et des zones de localisation associées où on s'attend à ce que la station mobile se trouve à ce moment dans une pluralité de zones de couverture ;
communiquer ledit plan d'enregistrement à une station de base (111-113, 121-122, 131-134) et à un centre d'une pluralité de centres de commutation mobiles (110, 120, 130) avec lesquels la station mobile est en communication ;
communiquer ledit plan d'enregistrement, depuis ledit centre de la pluralité de centres de commutation mobiles, à au moins un autre centre de commutation mobile lorsque la station mobile se déplace jusqu'à zone de couverture produite par une station de base qui est connectée audit autre centre de commutation mobile.

## Patentansprüche

1. Kommunikationssystem, das umfasst:
eine Vielzahl von Basisstationen (111-113, 121-122, 131-134), die eine Vielzahl von Versorgungsbereichen zur Verfügung stellen;
eine Vielzahl von Funkvermittlungsstellen (110, 120, 130), wobei jede in Verbindung mit mindestens einer der Vielzahl von Basisstationen und mindestens einer anderen der Vielzahl von Funkvermittlungsstellen in Verbindung steht; und
eine Mobilstation (150), die in Verbindung mit mindestens einer aus der Vielzahl von Basisstationen steht und geeignet um einen Registrierungsplan (170) zu speichern, der Zeitintervalle und verknüpfte Standortbereiche umfasst, an denen sich die Mobilstation erwartungsgemäß zu dieser Zeit in der Vielzahl von Versorgungsbereichen aufhält, und gestaltet ist, um den Registrierungsplan an eine Basisstation und an eine aus der Vielzahl der Funkvermittlungsstellen zu übermitteln, mit der sie in Verbindung steht;
wobei die Funkvermittlungsstelle zum Übermitteln des Registrierungsplanes an mindestens eine andere Funkvermittlungsstelle geeignet ist, wenn sich die Mobilstation auf einen Versorgungsbereich zubewegt, der durch eine Basisstation zur Verfügung gestellt wird, die mit einer anderen Funkvermittlungsstelle verbunden ist.

2. Verfahren zum Registrieren einer Mobilstation, das umfasst:
Speichern eines Registrierungsplanes (170) in einer Mobilstation (150), der Zeitintervalle und verknüpfte Standortbereiche umfasst, in denen sich die Mobilstation zu dieser Zeit in einer Vielzahl von Versorgungsbereichen erwartungsgemäß aufhält;
Übermitteln des Registrierungsplanes an eine Basisstation (111-113, 121-122, 131-134) und an eine aus einer Vielzahl von Funkvermittlungsstellen (110, 120, 130), mit der die Mobilstation in Verbindung steht;
Übermitteln des Registrierungsplanes von der einen aus einer Vielzahl von Funkvermittlungsstellen an mindestens eine andere Funkvermittlungsstelle, wenn sich die Mobilstation auf einen Versorgungsbereich zubewegt, der durch eine Basisstation zur Verfügung gestellt wird, die mit mindestens einer anderen Funkvermittlungsstelle verbunden ist.
